# EUROPEAN PATENT SPECIFICATION

(11) **EP 4 321 436 B1**
(45) Date of publication and mention of the grant of the patent: **26.11.2025**
(21) Application number: 23190095.2
(22) Date of filing: 07.08.2023
(51) Int. Cl.: B64D 11/06, B60N 2/75, B60N 2/02

(54) **ADJUSTABLE WIDTH PASSENGER SEAT**
FAHRGASTSITZ MIT VERSTELLBARER BREITE
SIÈGE PASSAGER À LARGEUR RÉGLABLE

(30) Priority: 09.08.2022 IN 202241045427; 14.06.2023 US 202318209648
(43) Date of publication of application: 14.02.2024
(73) Proprietor: B/E Aerospace, Inc., Winston-Salem, NC 27105 (US)
(72) Inventor: KODATI, Sambasiva Rao, Vinjaram (IN)
(74) Representative: Dehns

(56) References cited:
- EP-A2- 0 747 286
- EP-B1- 0 443 664
- EP-B1- 1 645 459
- WO-A1-95/29843
- US-A1- 2016 137 104

## Description

### TECHNICAL FIELD AND BACKGROUND

The present disclosure relates generally to passenger seats such as aircraft passenger seats, and more particularly to a width adjustable passenger seat including a seat bottom configured to adjust automatically according to the lateral armrest position.

Passenger seats are designed according to average passenger dimensions. In the case of aircraft, passenger seats may be designed according to the 95^{th} percentile adult male passenger. In other words, based on a sampling of adult males, the designed seat should be able to accommodate 95% of those sampled. Assuming adult males are the largest anticipated passengers in terms of physical dimensions, smaller passengers such as the 95^{th} percentile female and 95^{th} percentile child should also fit in the designed seat. While the fit may not be optimal or ergonomic for all occupants, and even less so for those at the upper and lower ends of the range and for females and children, the intention is to design the seat for safety and reasonable comfort. Seat elements that contribute to safety and comfort include the seat bottom width, seat bottom length, backrest width, backrest height, and armrest positions, among others.

Adjustment capabilities in economy class seats are limited by typical seat row construction and relatively short seat pitch. In premium class seats, singular seats and greater seat pitch provide opportunities for more and better adjustment capabilities. For example, premium class seats may be equipped with adjustable leg rests, headrests, and backrests that recline to a steep angle, among others. Even with the multitude of currently available adjustment capabilities, there are still some seat adjustments that are not made. For example, seat width is typically fixed and determined by the location of the spreaders and armrest attachment locations. For some passengers, the seat width and armrest spacing may be uncomfortable, particularly for those passengers at the limits of the seat design. For example, the armrests may be positioned too wide for small body types and too narrow for large body types.

Therefore, what is needed are further adjustment capabilities for seats to better customize seat fit for each passenger. In addition, what is needed is a link between seat elements that works in conjunction to provide comfort and support such that adjustment of one component automatically adjusts the other component without having to adjust components separately.

Adjustable width passenger seats are disclosed in EP 0 443 664 B1, EP 0 747 286 A2, WO 95/29843 A1 and EP 1 645 459 B1.

### BRIEF SUMMARY

Broadly speaking, the present disclosure is directed to passenger seat constructions in which seat elements are linked such that adjusting one seat element automatically adjusts the other seat element. In embodiments, the seat elements may include the armrests and the seat bottom cushion, wherein the width of the seat bottom cushion adjusts automatically according to the lateral armrest position. In use, for example, increasing the spacing between the armrests automatically increases the width of the seat bottom cushion, and vice versa. Whereas lateral armrest position may be changed using an active system that acts on the seat frame members, seat bottom cushion width may be changed using a passive system such as an expandable bellows or the like formed in the cushion. The same principles may be applied to the backrest considering the width of the seat bottom and backrest cushions on aircraft passenger seats may be similarly constructed.

Benefits of the seat adjustment mechanisms disclosed herein include, but are not limited to, the possibility for more supportive and comfortable passenger seats, the ability to accommodate a greater percentile of passengers, and an added feature for premium seating classes.

To achieve the foregoing and other advantages, the present invention provides a passenger seat as defined by claim 1.

In some embodiments, the frame is a vertically oriented plate and the connecting frame is oriented perpendicular to the plate.

In some embodiments, each of the first and second armrest mechanisms includes an armrest and at least one of a vertical armrest adjustment mechanism and a rotational armrest adjustment mechanism.

In some embodiments, the seat further includes at least one actuator positioned in the frame assembly operably coupled to the first and second lateral adjustment mechanisms.

In some embodiments, the adjustable side bellows are formed by material voids in the cushion.

In some embodiments, the adjustable bellows are pneumatically actuated and drive the armrest lateral repositioning.

In some embodiments, the at least one transverse frame member comprises a beam tube coupled at opposing ends to the first and second armrest mechanisms.

Embodiments of the inventive concepts may include one or more or any combination of the above aspects, features and configurations.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1A is a front view of a passenger seat according to an embodiment of the present disclosure;
FIG. 1B is a front view of the passenger seat of FIG. 1A showing the armrests positioned laterally outward and the seat bottom cushion expanded;
FIG. 2A is a front isometric view of the passenger seat showing the first armrest lateral position;
FIG. 2B is a front isometric view of the passenger seat of FIG. 2A showing the armrests positioned laterally outward;
FIG. 3 is a comparative view of seat elements showing the first and second lateral armrests positions;
FIG. 4A is a rear isometric view of seat frame elements;
FIG. 4B is an exploded view of the seat frame elements of FIG. 4A;
FIG. 5A is a top view of the seat frame elements showing the first armrest position;
FIG. 5B is a top view of the seat frame elements showing the second armrest position;
FIG. 6 is an exploded view of an armrest lateral adjustment mechanism;
FIG. 7A is a side view of the armrest lateral adjustment mechanism of FIG. 6 shown retracted;
FIG. 7B is a cross sectional view of FIG. 7A taken along line A-A;
FIG. 8A is a side view of the armrest lateral adjustment mechanism shown expanded;
FIG. 8B is a cross sectional view of FIG. 8A taken along line B-B;
FIG. 9A is a schematic diagram showing an expandable cushion element in a contracted condition;
FIG. 9B is a schematic diagram showing the expandable cushion element in an expanded condition; and
FIGS. 10A-C show cushion element expansion.

### DETAILED DESCRIPTION

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities. The aspects, features and functions described below in connection with one embodiment are intended to be applicable to the other embodiments described below except where expressly stated or where an aspect, feature or function is incompatible with an embodiment.

Broadly speaking, the present disclosure provides embodiments of passenger seat assemblies, for instance an aircraft passenger seat assembly, equipped with laterally repositionable armrests. In use, repositioning the armrests laterally outward automatically causes the seat bottom cushion to expand through stored energy in the seat bottom cushion, and the repositioning the armrests laterally inward automatically causes the seat bottom cushion to contract through force of the armrest adjustment mechanisms against the lateral sides of the seat bottom cushion. As such, the width of the armrests and the seat bottom cushion can be adjusted, in conjunction, according to the passenger preference, to tailor the seat to the size of the occupant, to change a seat size to accommodate a size change in a laterally adjacent seat, etc.

Various directional terms are used herein to describe components movement relative to the environment and to each other. For example, the term "forward" may mean front or the direction of travel parallel to the aircraft longitudinal axis, the term "lateral" may mean to the side such as perpendicular to the aircraft longitudinal axis, the term "outward" may mean away from a longitudinal axis, and the term "inward" may mean toward a longitudinal axis. For example, in the passenger seat embodiments disclosed herein the seat includes a longitudinal axis and a forward end, and armrests movements are described with reference thereto such that lateral movement outward or repositioning outward may mean moving away from the seat longitudinal axis and lateral movement inward or repositioning inward may mean moving toward the seat longitudinal axis.

In embodiments, the lateral armrest positions are configured to be changed from a first or contracted condition in which the armrests are positioned closer together, to a second or expanded condition in which the armrests are positioned farther apart. In some embodiments, the contracted condition, also referred to herein as "contracted," may correspond to a standard or normal operating condition of the seat, whereas the expanded condition, also referred to herein as "expanded," may correspond to a non-standard or occasional operating condition of the seat. For example, the contracted condition may accommodate the 95^{th} percentile occupant whereas the expanded condition may accommodate occupants falling outside of the 95^{th} percentile or a particular seating preference of the passenger.

In use, a portion of the seat cushion undergoes a dimensional change with the lateral repositioning of the armrests. Specifically, at least one expandable portion of the seat cushion expands in its width dimension when the armrests are repositioned laterally outward, and contracts in its width dimension when the armrests are repositioned laterally inward. In some embodiments, the construction of the cushion itself drives the width readjustment such that the readjustment happens automatically with the lateral armrest repositioning. In some embodiments, stored energy in the compressed seat cushion causes expansion when the compressive force is removed when the armrests are repositioned laterally outward.

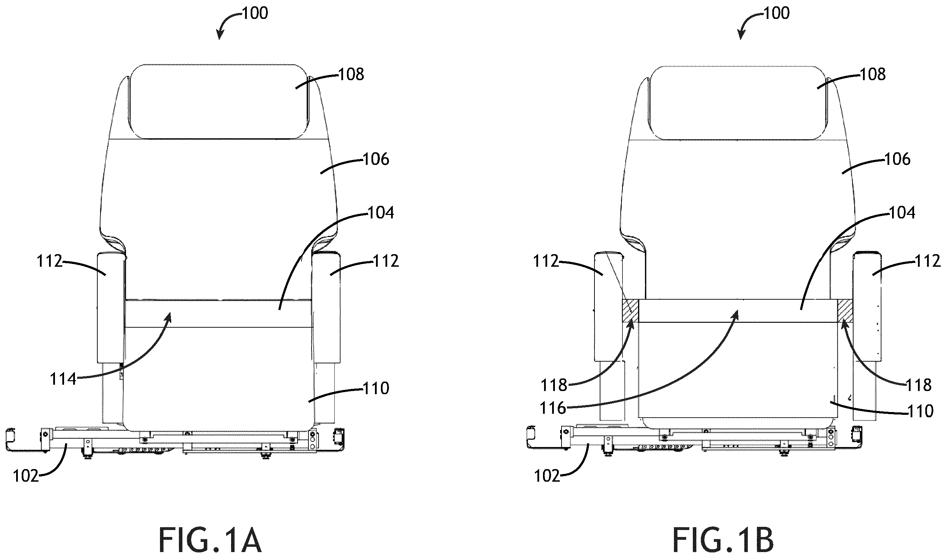

FIGS. 1A-2B illustrate a non-limiting example of a passenger seat, for instance a premium class aircraft passenger seat 100. The passenger seat 100 may be mounted on a frame 102 capable of adjusting the lateral seat position. In other embodiments, the passenger seat 100 may be mounted directly to the floor. As shown, the passenger seat 100 generally includes a seat bottom 104, a backrest 106 including a headrest 108, a deployable leg rest 110, and left and right armrests 112. The passenger seat 100 may be equipped with various adjustment mechanisms including actuator driven translational and rotational mechanisms for changing sitting positions, component angles, component relationships, component performance, etc. For example, the seat may adjust between an upright sitting position shown in the drawings and a bed position for sleeping, through various intermediate sitting positions. Frame members generally contribute to support while cushions and dress covers generally contribute to comfort. Dress covers and closeouts further contribute to the seat aesthetics.

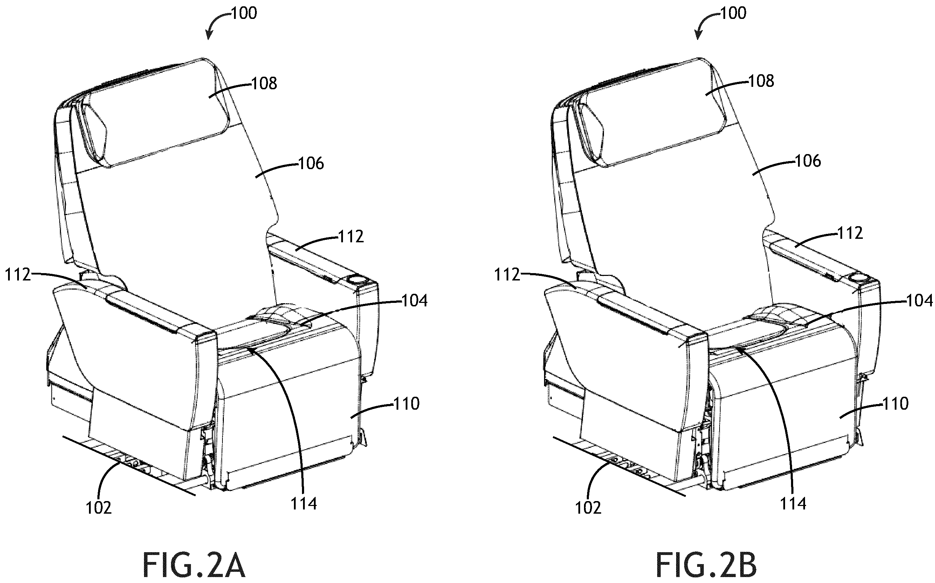

FIGS. 1A and 2A show the "first" armrest position or seat condition in which the armrests 112 are positioned laterally inward and the seat cushion 114 contracted. FIGS. 1B and 2B show the "second" armrest position or seat condition in which the armrests 112 are repositioned laterally outward and the seat cushion 114 expanded. In some embodiments, the seat cushion 114 is continuous from end-to-end and includes a middle portion 116 positioned between expandable side portions 118. In some embodiments, the seat cushion 114 includes separate middle and side portions. In embodiments, the side portions 118 are configured to expand and contract automatically in conjunction with lateral armrest repositioning. For example, repositioning the armrests laterally inward causes an element to compress the at least one expandable cushion element, and repositioning the armrests laterally outward relaxes or removes the compressive force acting on the at least one expandable cushion element.

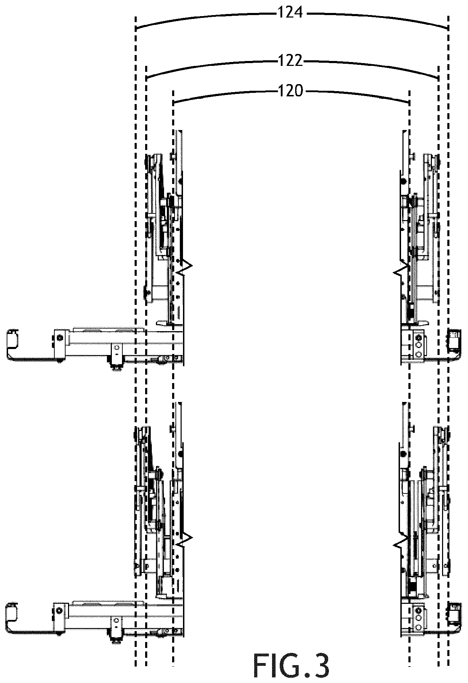

FIG. 3 shows a comparison of the first and second lateral armrests positions. Reference lines 120 indicate the position of the fixed longitudinal seat frame members for a comparative reference. As used herein, the term "fixed" is with regard to the armrests and their adjustment mechanisms. It is understood that the seat may be equipped with other adjustment mechanisms configured to change the seat frame position in the aircraft or angle. Reference lines 122 indicate the first, normal or contracted position on the armrests. Reference lines 124 indicate the second, occasional or expanded position of the armrests. In embodiments, the armrests move laterally outward, independently or preferably in conjunction, from the contracted condition to the expanded condition, and laterally inward, independently or preferably in conjunction, from the expanded condition to the contracted condition. The difference between the first and second positions may be subtle as shown in FIG. 3, for instance a few centimeters change, or more pronounced if desired depending on the seat construction and application.

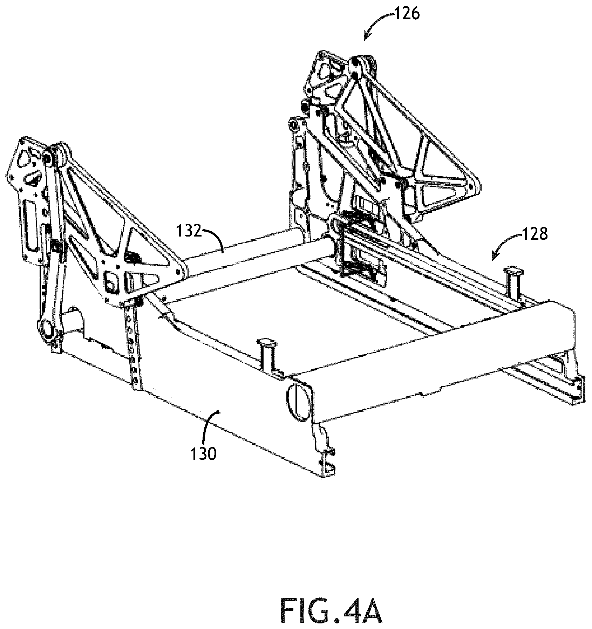

FIG. 4A shows the seat frame assembly 126. In some embodiments, the frame assembly 126 includes a lower carriage assembly 128, also referred to herein as a lower frame assembly, configured to translate forward and aft as the seat adjusts between upright and reclined. The lower frame assembly 128 generally includes spaced longitudinal frame members 130 interconnected through transverse frame members 132, for instance transverse beam tubes. The transverse frame members 132 support and maintain squareness of the lower frame assembly and further serve to attach and guide additional components as discussed further below.

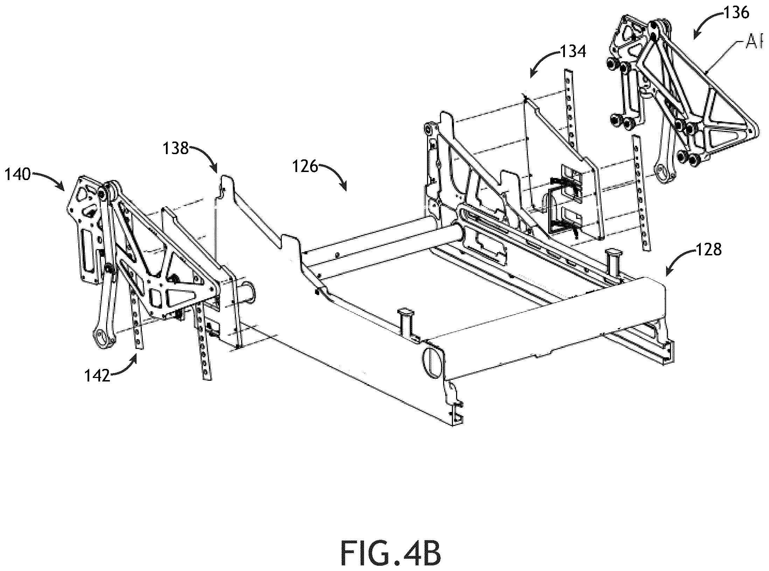

FIG. 4B shows the disassembled state of the frame assembly 126. The frame assembly 126 generally includes the lower carriage assembly 128, a first lateral adjustment mechanism 134 movably coupled to the first lateral side (e.g., right side) of the lower frame assembly 126, a first armrest mechanism 136 attached to an outboard lateral side of the first lateral adjustment mechanism 134, a second lateral adjustment mechanism 138 movably coupled to a second lateral side (e.g., left side) of the lower frame assembly 126, and a second armrest mechanism 140 (e.g., left side armrest) attached to an outboard lateral side of the second lateral adjustment mechanism 138.

In use, the first or right-side lateral adjustment mechanism 134 operates to laterally reposition the first or right-side armrest mechanism 136, and the second or left-side lateral adjustment mechanism 138 operates to laterally reposition the second or left side armrest mechanism 140. The right-side armrest is carried by the right-side adjustment mechanism and the left-side armrest is carried by the left-side adjustment mechanism such that the right and left side armrests reposition laterally with their respective adjustment mechanism. Each armrest adjustment mechanism is couped to an armrest (see FIGS. 1A-2B) and may include at least one of a vertical adjustment mechanism 142 and a rotational adjustment mechanism for inducing respective vertical position and angular changes in the armrest.

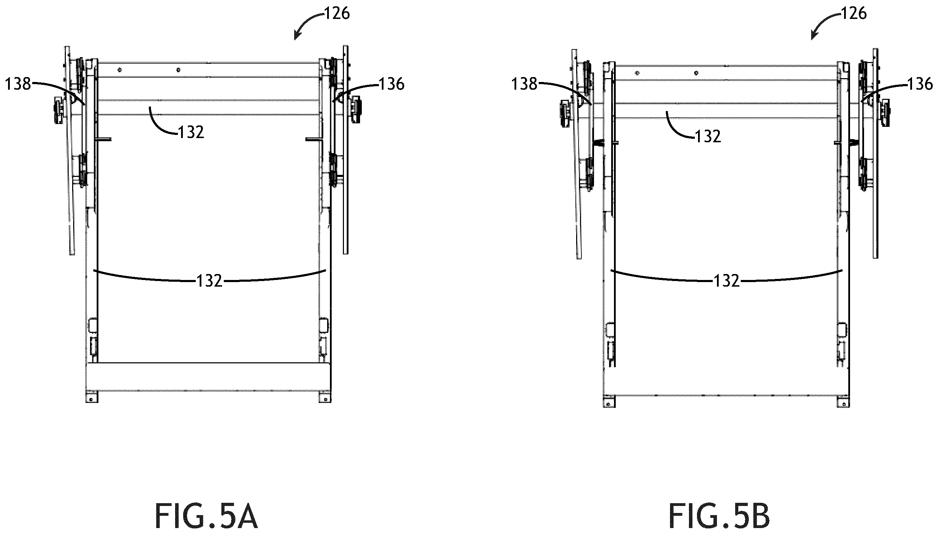

FIGS. 5A and 5B show the frame assembly 126 with the lateral adjustment mechanisms 136, 138 attached to illustrate the lateral first and second positions. As shown, the lateral adjustment mechanisms 136, 138 are coupled to the transverse frame member 132 and move toward and apart from the fixed longitudinal frame members 130. As discussed further below, the lateral adjustment mechanisms 136, 138 are driven toward and apart relative to the longitudinal frame members 130 by way of a motion driver and lever arrangement.

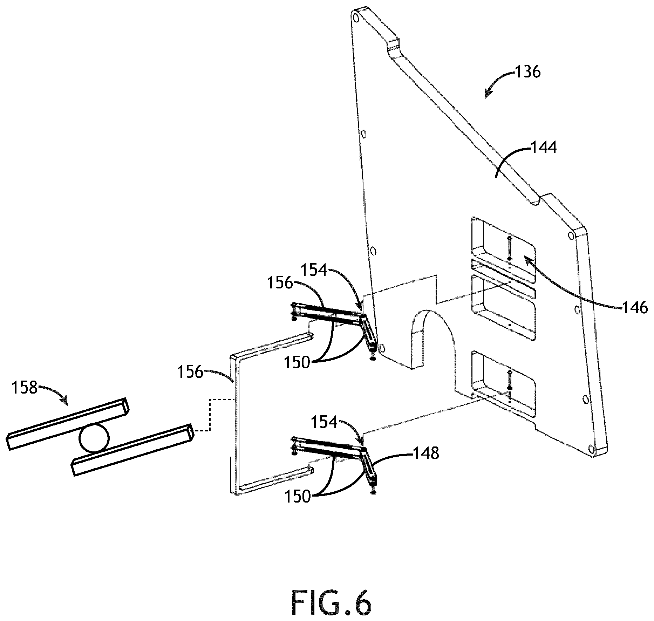

FIG. 6 shows an embodiment of one of the lateral adjustment mechanisms 136. The mechanism generally includes a frame implemented as a vertical plate 144. Cutouts 146 formed in the plate 144 align in a vertical stack and receive levers 148 held in place using vertical pins 150. Each lever 148 includes a pair of links 152 attached together at a rotating joint 154. Each lever 148 is coupled to the plate 144 using a vertical pin 150. One lever is positioned above the other, for instance in a separate cutout formed in the plate, such that a vertical rotational axis extends through the height of the plate 144. Each lever 148 is further coupled to one end of a connecting frame 156 at its rotating joint 154.

In some embodiments, the connecting frame 156 is C-shaped and includes a first or top leg and a second or bottom leg. The top leg is associated with the top lever and the bottom leg is associated with the bottom lever in a vertical arrangement. The connecting frame 156 is further coupled to a motion driver, for instance a rack-and-pinion assembly 158 shown schematically in FIG. 6, an actuator such as a linear or rotary actuator, or other mechanism for causing relative motion. In use, the rack-and-pinion assembly 158 is coupled at opposing ends to the right and left connecting frames of the opposing lateral adjustment mechanisms 136, 138 such that activation of the assembly drives movement of the connecting frames in opposite directions thereby increasing or decreasing the distance between the armrests.

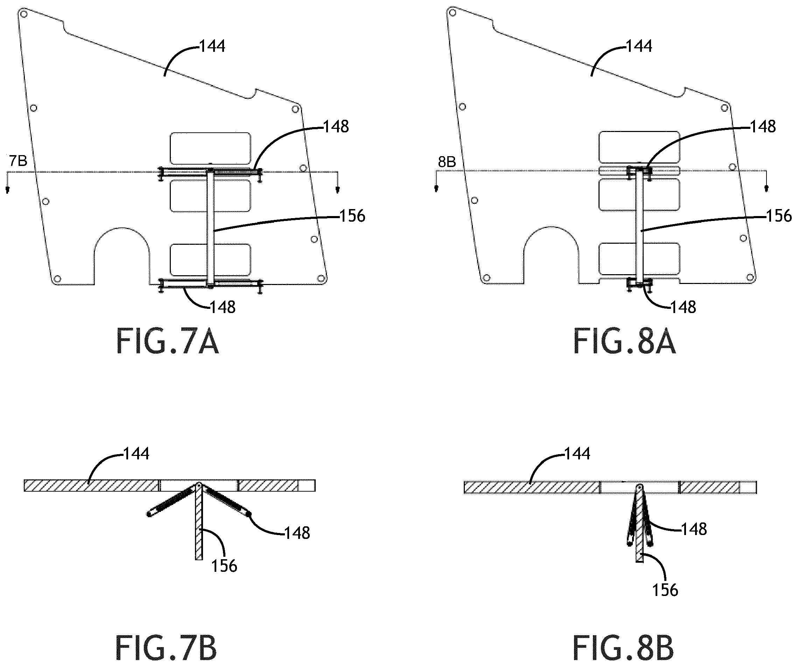

Referring to FIGS. 7A-8B, driving the connecting frames 156 laterally outward relative to the frame assembly drives the frame 144 laterally outward away from the frame assembly, and driving the connecting frames 156 laterally inward relative to the frame assembly drives the frame 144 laterally inward toward the frame assembly. The ends of the levers 148 (shown detached in FIGS. 7A-8B and attached to the frame assembly in FIGS. 5A and 5B) pivotally attach to the frame assembly, for instance to the longitudinal frame members. FIGS. 7A and 7B shown the lever ends diverged to position the frame 144 nearest the frame assembly. FIGS. 8A and 8B show the lever ends converged to position the frame 144 farthest the frame assembly. As discussed above, the action of the motion driver drives the motion of the connecting frame 156 and consequently the lever action.

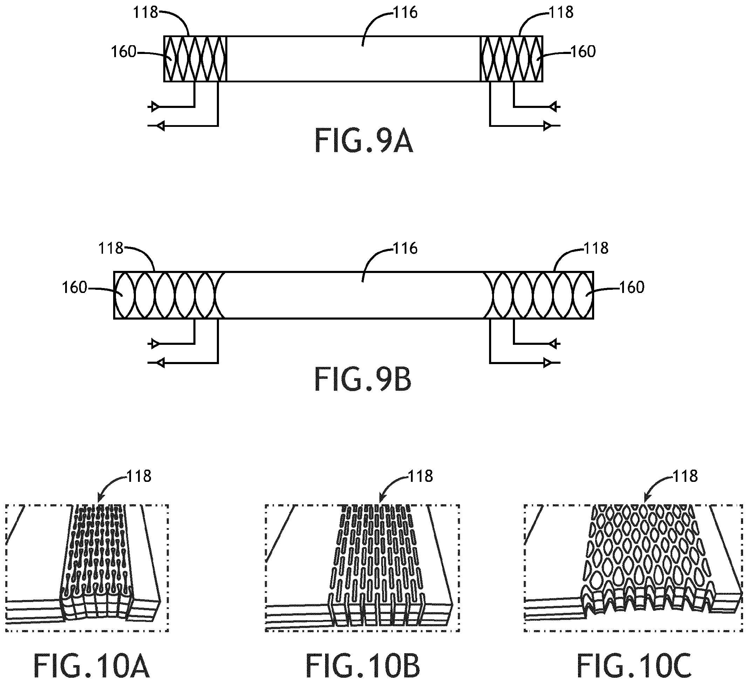

FIGS. 9A and 9B show cushion expansion and contraction schematically. As shown, the cushion includes a center portion 116 and at least one expandable side portion implemented as a bellows 160, and preferably an expandable side portion or bellows positioned on each lateral side of the center portion 116. In some embodiments, the cushion may be integrally formed. In other embodiments, the center and side portions may be separate. In a particular embodiment, the cushion may be pneumatically actuated via a compressed air source. FIG. 9A shows air flow into and out of the expandable side portions. In some embodiments, inflation of the expandable portions drives armrest positioning laterally outward while evacuation of air allows the armrests to return to their inward position, for instance via force of a return mechanism such as a return spring.

FIGS. 10A-C show sequential cushion expansion driven by armrest repositioning. As shown, each side portion 116 includes voids forming a bellow. When compressed by the lateral adjustment mechanism as shown in FIG. 10A, for instance compressed by the frame (144 as shown in FIG. 6), the material voids contract to decrease the width of the cushion. When decompressed as shown in FIG. 10B, the material voids return to their resting state. When stretched, as shown in FIG. 10C, the material voids are expanded. In some embodiments, the lateral side of the expandable portion is coupled to the inboard side of the frame such that the cushion moves with the frame to follow and fill the formed gap.

While the foregoing description provides embodiments of the invention by way of example only, it is envisioned that other embodiments may perform similar functions and/or achieve similar results within the scope of the claims.

## Claims

1. A passenger seat (100), comprising:
a frame assembly (126) including spaced longitudinal frame members (130) and at least one transverse frame member (132);
a first lateral adjustment mechanism (134) movably attached to a first lateral side of the frame assembly;
a first armrest mechanism (136) positioned on an outboard lateral side of the first lateral adjustment mechanism;
a second lateral adjustment mechanism (138) movably attached to a second lateral side of the frame assembly;
a second armrest mechanism (140) positioned on an outboard lateral side of the second lateral adjustment mechanism; and
a cushion element (114) supported by the frame assembly, the cushion element including at least one laterally expandable portion (118);
wherein the at least one laterally expandable portion is configured to automatically expand as the respective first and second armrest mechanisms are repositioned laterally outward, and automatically contract as the respective first and second armrest mechanisms are repositioned laterally inward; and **characterised in that** each of the first and second lateral adjustment mechanisms comprises a frame (144);
spaced first and second levers (148) each including first and second links (152) attached at a rotating joint (154), each of the first and second links configured to interact with the frame assembly; and
a connecting frame (156) including a first leg attached to the first lever and a second leg attached to the second lever;
wherein, in use, driving the connecting frame laterally outward relative to the frame assembly drives the frame laterally outward relative to the frame assembly, and driving the connecting frame laterally inward relative to the frame assembly drives the frame laterally inward toward the frame assembly.

2. The passenger seat according to claim 1, wherein:
the frame includes a vertical plate; and
the connecting frame is oriented perpendicular to the plate and is configured to be driven laterally inward or outward via a rack-and-pinion assembly.

3. The passenger seat according to any preceding claim, wherein each of the first and second armrest mechanisms comprises:
an armrest (112); and
at least one of a vertical armrest adjustment mechanism and a rotational armrest adjustment mechanism.

4. The passenger seat according to any preceding claim, further comprising a rack-and-pinion mechanism (158) positioned in the frame assembly coupled to each of the first and second lateral adjustment mechanisms.

5. The passenger seat according to any preceding claim, wherein the at least one laterally expandable portion is implemented as a bellow including material voids formed in the cushion.

6. The passenger seat according to any preceding claim, wherein the at least one laterally expandable portion is pneumatically actuated.

7. The passenger seat according to any preceding claim, wherein the at least one transverse frame member comprises a beam tube coupled to each of the first and second armrest mechanisms.

## Patentansprüche

1. Passagiersitz (100), umfassend:
eine Rahmenbaugruppe (126), die beabstandete longitudinale Rahmenelemente (130) und mindestens ein transversales Rahmenelement (132) einschließt;
einen ersten lateralen Einstellmechanismus (134), der beweglich an einer ersten lateralen Seite der Rahmenbaugruppe angebracht ist;
einen ersten Armlehnenmechanismus (136), der an einer äußeren lateralen Seite des ersten lateralen Einstellmechanismus positioniert ist;
einen zweiten lateralen Einstellmechanismus (138), der beweglich an einer zweiten lateralen Seite der Rahmenbaugruppe angebracht ist;
einen zweiten Armlehnenmechanismus (140), der an einer äußeren lateralen Seite des zweiten seitlichen Einstellmechanismus positioniert ist; und
ein Polsterelement (114), das von der Rahmenbaugruppe getragen wird, wobei das Polsterelement mindestens einen lateral ausdehnbaren Abschnitt (118) einschließt;
wobei der mindestens eine lateral ausdehnbare Abschnitt konfiguriert ist, um sich automatisch auszudehnen, wenn der jeweilige erste und zweite Armlehnenmechanismus lateral nach außen umpositioniert wird, und sich automatisch zusammenzuziehen, wenn der jeweilige erste und zweite Armlehnenmechanismus lateral nach innen umpositioniert wird;
**dadurch gekennzeichnet, dass**
jeder der ersten und zweiten lateralen Einstellmechanismen Folgendes umfasst:
einen Rahmen (144);
einen ersten und einen zweiten Hebel (148), die voneinander beabstandet sind und jeweils ein erstes und ein zweites Glied (152) einschließen, die an einem Drehgelenk (154) befestigt sind, wobei jedes der ersten und zweiten Glieder konfiguriert ist, um mit der Rahmenbaugruppe zu interagieren; und
einen Verbindungsrahmen (156), der einen ersten Schenkel, der an dem ersten Hebel befestigt ist, und einen zweiten Schenkel, der an dem zweiten Hebel befestigt ist, einschließt;
wobei bei Verwendung der Verbindungsrahmen lateral nach außen in Bezug auf die Rahmenbaugruppe gefahren wird und der Rahmen lateral nach außen in Bezug auf die Rahmenbaugruppe gefahren wird, und der Verbindungsrahmen lateral nach innen in Bezug auf die Rahmenbaugruppe gefahren wird.

2. Passagiersitz nach Anspruch 1, wobei:
der Rahmen eine vertikale Platte einschließt; und
der Verbindungsrahmen senkrecht zur Platte ausgerichtet und konfiguriert ist, um über eine Zahnstangen- und Ritzelbaugruppe seitlich nach innen oder nach außen bewegt zu werden.

3. Passagiersitz nach einem der vorstehenden Ansprüche, wobei jeder der ersten und zweiten Armlehnenmechanismen Folgendes umfasst:
eine Armlehne (112); und
mindestens einen Einstellmechanismus für die vertikale Armlehne und einen Einstellmechanismus für die drehbare Armlehne.

4. Passagiersitz nach einem der vorstehenden Ansprüche, ferner umfassend einen Zahnstangen- und Ritzelmechanismus (158), der in der Rahmenbaugruppe positioniert und mit jedem der ersten und zweiten seitlichen Einstellmechanismen gekoppelt ist.

5. Passagiersitz nach einem der vorstehenden Ansprüche, wobei der mindestens eine lateral ausdehnbare Abschnitt als Balg implementiert ist, der im Kissen gebildete Materialhohlräume einschließt.

6. Passagiersitz nach einem der vorstehenden Ansprüche, wobei der mindestens eine lateral ausfahrbare Abschnitt pneumatisch betätigt wird.

7. Passagiersitz nach einem der vorstehenden Ansprüche, wobei das mindestens eine transversale Rahmenelement ein Strahlrohr umfasst, das jeweils mit dem ersten und zweiten Armlehnenmechanismus gekoppelt ist.

## Revendications

1. Siège passager (100) comprenant :
un ensemble cadre (126) comprenant des éléments de cadre longitudinaux espacés (130) et au moins un élément de cadre transversal (132) ;
un premier mécanisme de réglage latéral (134) fixé de manière amovible à un premier côté latéral de l'ensemble cadre ;
un premier mécanisme d'accoudoir (136) positionné sur un côté latéral extérieur du premier mécanisme de réglage latéral ;
un second mécanisme de réglage latéral (138) fixé de manière amovible à un second côté latéral de l'ensemble cadre ;
un second mécanisme d'accoudoir (140) positionné sur un côté latéral extérieur du second mécanisme de réglage latéral ; et
un élément de coussin (114) supporté par l'ensemble cadre, l'élément de coussin comportant au moins une partie extensible latéralement (118) ;
dans lequel l'au moins une partie extensible latéralement est configurée pour s'étendre automatiquement lorsque les premier et second mécanismes d'accoudoir respectifs sont repositionnés latéralement vers l'extérieur et pour se contracter automatiquement lorsque les premier et second mécanismes d'accoudoir respectifs sont repositionnés latéralement vers l'intérieur ;
et **caractérisé en ce que**
chacun des premier et second mécanismes de réglage latéral comprend :
un cadre (144) ;
des premier et second leviers espacés (148) comportant chacun des première et seconde biellettes (152) fixées au niveau d'une articulation rotative (154), chacune des première et seconde biellettes étant configurée pour interagir avec l'ensemble cadre ; et
un cadre de liaison (156) comportant un premier montant fixé au premier levier et un second montant fixé au second levier ;
dans lequel, lors de l'utilisation, l'entraînement du cadre de liaison latéralement vers l'extérieur par rapport à l'ensemble cadre entraîne le cadre latéralement vers l'extérieur par rapport à l'ensemble cadre, et l'entraînement du cadre de liaison latéralement vers l'intérieur par rapport à l'ensemble cadre entraîne le cadre latéralement vers l'intérieur en direction de l'ensemble cadre.

2. Siège passager selon la revendication 1, dans lequel :
le cadre comporte une plaque verticale ; et
le cadre de liaison est orienté perpendiculairement à la plaque et est configuré pour être entraîné latéralement vers l'intérieur ou vers l'extérieur via un ensemble à crémaillère.

3. Siège passager selon une quelconque revendication précédente, dans lequel chacun des premier et second mécanismes d'accoudoir comprend :
un accoudoir (112) ; et
au moins l'un d'un mécanisme de réglage d'accoudoir vertical et d'un mécanisme de réglage d'accoudoir rotatif.

4. Siège passager selon une quelconque revendication précédente, comprenant également un mécanisme à crémaillère (158) positionné dans l'ensemble cadre accouplé à chacun des premier et second mécanismes de réglage latéral.

5. Siège passager selon une quelconque revendication précédente, dans lequel l'au moins une partie extensible latéralement est mise en œuvre sous la forme d'un soufflet comportant des vides de matériau formés dans le coussin.

6. Siège passager selon une quelconque revendication précédente, dans lequel l'au moins une partie extensible latéralement est actionnée pneumatiquement.

7. Siège passager selon une quelconque revendication précédente, dans lequel l'au moins un élément de cadre transversal comprend un tube de faisceau accouplé à chacun des premier et second mécanismes d'accoudoir.
